(19) Europäisches Patentamt
European Patent Office
Office européen des brevets

(11) **EP 3 383 568 B1**

(12) **EUROPÄISCHE PATENTSCHRIFT**

(45) Veröffentlichungstag und Bekanntmachung des Hinweises auf die Patenterteilung:
**26.05.2021  Patentblatt 2021/21**

(21) Anmeldenummer: **17700606.1**

(22) Anmeldetag: **04.01.2017**

(51) Int Cl.:
*B22F 3/105* (2006.01)     *B29C 67/00* (2017.01)
*B29C 64/153* (2017.01)     *B29C 64/295* (2017.01)
*B33Y 30/00* (2015.01)     *B33Y 50/02* (2015.01)

(86) Internationale Anmeldenummer:
**PCT/EP2017/050108**

(87) Internationale Veröffentlichungsnummer:
**WO 2017/129381 (03.08.2017 Gazette 2017/31)**

(54) **VERFAHREN ZUM GENERATIVEN HERSTELLEN VON BAUTEILEN MIT HEIZBARER BAUPLATTFORM UND ANLAGE FÜR DIESES VERFAHREN**

METHOD FOR GENERATIVE PRODUCTION OF COMPONENTS WITH HEATABLE CONSTRUCTION PLATFORM AND SYSTEM USED IN THIS METHOD

PROCEDE DE FABRICATION GENERATIVE DE COMPOSANTS A L'AIDE D'UNE PLATEFORME DE CONSTRUCTION POUVANT ETRE CHAUFFEE ET INSTALLATION POUR LEDIT PROCEDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2016  EP 16153141**

(43) Veröffentlichungstag der Anmeldung:
**10.10.2018  Patentblatt 2018/41**

(73) Patentinhaber: **Siemens Aktiengesellschaft
80333 München (DE)**

(72) Erfinder: **REZNIK, Daniel
13503 Berlin (DE)**

(56) Entgegenhaltungen:
WO-A1-2008/143106        WO-A1-2008/143106
DE-A1-102007 057 450     DE-A1-102007 057 450
DE-A1-102013 001 374     DE-A1-102013 001 374
US-A1- 2005 173 380       US-A1- 2005 173 380
US-A1- 2007 122 562       US-A1- 2015 367 415
US-A1- 2015 367 415

**Beschreibung**

Die Erfindung betrifft ein Verfahren zum generativen Herstellen eines Bauteils auf einer Bauplattform. Bei diesem Verfahren werden Partikel eines Baumaterials Lage für Lage erst auf die Bauplattform (die als Basis für die erste Lage des Bauteils dient) und dann auf das in Entstehung befindliche Bauteil (von dem bereits die erste Lage auf der Bauplattform sowie evtl. weitere Lagen hergestellt wurden) aufgebracht und durch einen Energiestrahl, beispielsweise einen Elektronenstrahl oder einen Laserstrahl, verfestigt. Die Verfestigung führt zu einem festen Zusammenhalt der Partikel des Baumaterials, welche das herzustellende Bauteil bilden. Die Verfestigung kann beispielsweise durch Aufschmelzen oder Sintern erfolgen. Als aufschmelzende Verfahren sind beispielsweise das selektive Laserschmelzen (auch Selective Laser Melting, SLM), das Elektronenstrahlschmelzen (auch Electron Beam Melting, EBM) oder das Laserauftragsschweißen (auch Laser Metal Deposition, LMD) geeignet. Als Sinterverfahren ist das selektive Lasersintern (auch Selective Laser Sintering, SLS) als Beispiel zu nennen.

Das Bauteil wird lagenweise auf der Bauplattform hergestellt. Diese dient somit auch als Basis zur Herstellung der ersten Lage des Bauteils. Das Bauteil kann beispielsweise mit Laserauftragsschweißen direkt auf der Bauplattform hergestellt werden, wobei die Partikel des Baumaterials direkt dem Laserstrahl zugeführt werden. Alternativ kann auf der Bauplattform ein Pulverbett erzeugt werden, wobei jeweils nur die Partikel des Baumaterials im Pulverbett aufgeschmolzen werden, die zur Ausbildung des Bauteils notwendig sind. Die Bauplattform ist außerdem mit einer Heizeinrichtung ausgestattet, wobei das in Entstehung befindliche Bauteil über die Bauplattform erwärmt wird. Auf diese Weise ist eine Erwärmung des in Entstehung befindlichen Bauteils möglich, um beispielsweise die notwendige Leistung des Energiestrahls zum Aufschmelzen der Partikel zu verringern.

Weiterhin betrifft die Erfindung eine Anlage zum lagenweisen generativen Herstellen eines Bauteils mit einer Bauplattform für das herzustellende Bauteil, wobei die Bauplattform mit einer Heizeinrichtung ausgestattet ist. Eine solche Anlage weist die erforderlichen Elemente auf, damit mit ihr das eingangs beschriebene Verfahren durchgeführt werden kann.

Ein ähnliches Verfahren sowie die genannte Anlage sind aus dem Stand der Technik bekannt. Gemäß der EP 1 355 760 B1 ist ein SLM-Verfahren beschrieben, bei dem eine Bauplattform, auf dem das Bauteil entstehen soll, als Heizplatte ausgeführt ist. Es ist ein Temperaturfühler vorgesehen, mit der eine Regelung der Energieversorgung der Heizplatte durchgeführt werden kann. Mit dieser Regelung kann die Heizplatte auf einem gewünschten Temperaturniveau gehalten werden. Beispielsweise kann die Heizplatte während des gesamten Prozesses auf einem Temperaturniveau von 500°C betrieben werden.

Bei einer Durchführung des Verfahrens gemäß EP 1 355 760 B1 zeigt es sich jedoch, dass die Temperatur der aktuell herzustellenden Lage eines in Entstehung befindlichen Bauteils mit zunehmender Bauteilhöhe nicht der über die Heizplatte eingestellten Temperatur entspricht, sondern höher liegt. Dies beeinflusst die Qualität des hergestellten Bauteils negativ.

Bei einem LMD-Verfahren gemäß der DE 10 2009 051 479 A1 wird beispielsweise eine Turbinenschaufel hergestellt. Bei diesem Verfahren soll die Aufbau- und Fügezone auf eine Temperatur knapp unterhalb des Schmelzpunktes des Bauteilwerkstoffs aufgeheizt werden. Hierdurch soll die Kristallstruktur des entstehenden Bauteils beeinflusst und gesteuert werden. Zum Aufheizen der Fügezone soll ein Zonenofen zum Einsatz kommen, wobei die Aufbau- und Fügezone in dessen Hochtemperaturzone liegt. Im Zonenofen kann in den bereits hergestellten Bereichen der Turbinenschaufel ein vorbestimmter Temperaturgradient senkrecht zu den Lagen eingestellt werden. Zu diesem Zweck wird die Bauplattform in den Zonenofen hinein abgesenkt, wobei diese selbst nicht beheizbar ist. Die Beheizung über den Zonenofen ist jedoch technisch sehr aufwändig.

Eine andere Möglichkeit besteht gemäß der DE 10 2012 206 122 A1 darin, eine lokale und individuell auf die Bauteilgeometrie angepasste Erwärmung induktiv vorzunehmen, wobei zu diesem Zweck in der Anlage mehrere Induktionsspulen vorgesehen werden. Die Induktionsspulen werden zu diesem Zweck über eine Steuerung und/oder Regelung angesteuert und können auf diese Weise auch lokal Wärme in das in Entstehung befindliche Bauteil einleiten. Hierdurch kann beispielsweise eine Rissbildung in dem in Entstehung befindlichen Bauteil vermieden werden. Jedoch ist auch für diese Lösung der technische Aufwand vergleichsweise groß. Das generative Verfahren nutzt einen Energiestrahl zum selektiven Bestrahlen eines Pulverbetts, in dem das Bauteil hergestellt werden soll.

US 2005/173380 A1 offenbart ein Verfahren zum generativen Herstellen eines Bauteils.

Die Aufgabe der Erfindung besteht darin, ein Verfahren zum generativen Herstellen eines Bauteils sowie eine Anlage zur Durchführung dieses Verfahrens anzugeben, mit dem bzw. mit der das Bauteil während des generativen Herstellungsprozesses mit vergleichsweise einfachen Mitteln auf einem möglichst konstanten Temperaturniveau gehalten werden kann, wobei sich dieses Temperaturniveau in der gerade in Herstellung befindlichen Lage des Bauteils einstellen soll.

Diese Aufgabe wird mit dem eingangs angegebenen Verfahren erfindungsgemäß dadurch gelöst, dass die Heizleistung der Heizeinrichtung im fortlaufenden Verfahren in dem Maße abgesenkt wird, dass ein definierter Toleranzbereich für eine Referenztemperatur $T_r$ in der jeweiligen letzten hergestellten Lage eingehalten wird. Gemeint mit

der Referenztemperatur $T_r$ ist die Temperatur in der Lage, die sich nach deren Erstarrung und Abkühlung im Falle schmelzender generativer Fertigungsverfahren einstellt. Es wird also nicht auf die Temperatur im Schmelzbad oder der Wärmeeinflusszone des Schmelzbades abgestellt, die eindeutig höher liegt als die sich nach deren Erstarrung in der gerade hergestellten Lage einstellende Temperatur. Allerdings liegt die Temperatur noch höher als nach vollständiger Abkühlung des Bauteils. Dies liegt an der durch die Heizeinrichtung und den Energiestrahl in das Bauteil eingebrachte Leistung und lässt sich dadurch erklären, dass das zu fertigende Werkstück einen nicht zu vernachlässigen thermischen Widerstand aufweist. Der thermische Widerstand $R_{th}$ liegt typischerweise bei durch generative Verfahren verarbeiteten Metallpulvern zwischen 1 und 10 pro K/W. Der Energiestrahl zum Verfestigen der Partikel koppelt im zeitlichen Mittel eine Verfestigungsleistung $P_s$ (d. h. eine Schmelzleistung bei schmelzenden Verfahren oder eine Sinterleistung bei sinternden Verfahren) ein, die mit 10 bis 50 W angesetzt werden kann. Aufgrund des Wärmewiderstands des in Entstehung befindlichen Bauteils kann diese Wärme nicht schnell genug abgeführt werden, so dass die Oberflächentemperatur des Werkstücks, d. h. die Temperatur der aktuell hergestellten Lage im Laufe des Aufbauprozesses des Bauteils kontinuierlich steigt. Die maximale Erwärmung kann dadurch unter Berücksichtigung von $R_{th}$ und $P_s$ abgeschätzt werden, wobei im Folgenden beispielhaft von $R_{th}$ = 5 K/W und $P_s$ = 30 W ausgegangen wird.

$$R_{th} \cdot P_s = 5 \text{ K/W} \cdot 30 \text{ W} = 150 \text{ K}$$

Es zeigt sich damit, dass nach dieser Abschätzung die Temperatur des Bauteils bis zu 150 k oberhalb der eingestellten Temperatur der Heizplatte liegen kann. Da diese Einschätzung jedoch keine thermischen Verluste berücksichtigt, die durch Konvektion und Wärmestrahlung zustande kommt, werden die Temperaturerhöhungen in der Realität niedriger ausfallen. Jedoch hat es sich gezeigt, dass der Effekt einer mangelnden Wärmeabführung aufgrund des Wärmewiderstands des Bauteils die überwiegende zu berücksichtigende Größe darstellt.

Damit die Heizleistung im fortlaufenden Verfahren abgesenkt werden kann, muss diese am Anfang des Verfahrens mindestens auf ein Niveau gebracht werden, damit die maximale Erwärmung des Bauteils im fortlaufenden Prozess ausgeglichen werden kann. Für das oben genannte Beispiel ist damit ein Temperaturniveau einzustellen, welches mindestens 150 K oberhalb der Ausgangstemperatur der Bauplatte ohne eine Beheizung liegt. Diese Ausgangstemperatur wird mit $T_0$ berücksichtigt, wobei sich die Erwärmung $T_1$ der obersten Schicht des fertiggestellten Bauteils rechnerisch ergibt zu

$$T_1 = T_0 + R_{th} \cdot P_s$$

Da die Referenztemperatur $T_r$ in der Realität nie genau eingehalten werden kann, wird erfindungsgemäß ein zulässiger Toleranzbereich definiert, innerhalb dessen die Temperatur schwanken kann. Dieser Toleranzbereich hängt von den Anforderungen ab, die an das herzustellende Bauteil und das zu verarbeitete Material gestellt werden. Das Ziel bei der generativen Herstellung des Bauteils kann darin liegen, Spannungen aufgrund der Abkühlung des Bauteils klein zu halten oder ein bestimmtes metallisches Gefüge in dem Bauteil einzustellen, welches von der Abkühlgeschwindigkeit des Bauteils beeinflusst wird. Der Toleranzbereich kann beispielsweise bei +/-20 K liegen.

Der Vorteil einer Absenkung der Heizleistung der Heizeinrichtung in der Bauplattform liegt darin, dass einerseits eine einfache Heizeinrichtung zur Anwendung kommen kann, auf der anderen Seite durch eine Berücksichtigung der durch den Energiestrahl erzeugten Heizleistung eine Abführung der Wärme durch das Bauteil in Richtung der Bauplattform möglich wird. Dies ist nur durch Verringerung der Heizleistung in der Bauplattform möglich, weil sich hierdurch ein Temperaturgradient zwischen der in Herstellung befindlichen Lage und der Bauplattform ausbilden kann. Auf eine technisch wesentlich kompliziertere direkte Beheizung der in Herstellung befindlichen Lage kann hierdurch vorteilhaft verzichtet werden.

Gemäß einer vorteilhaften Ausgestaltung der Erfindung wird für das Absenken der Heizleistung eine Steuerung verwendet, die als Eingangsgrößen für ein Absenken der Heizleistung der Heizeinrichtung eine Verfestigungsleistung $P_s$ des Energiestrahls und die Wärmeleiteigenschaften des Bauteils berücksichtigt. Die Verfestigungsleistung (d. h. Schmelzleistung bei einem schmelzenden generativen Verfahren oder Sinterleistung bei einem sinternden generativen Verfahren) berücksichtigt den Wärmeeintrag des Energiestrahls in das Bauteil. Vorteilhaft kann bei der Ermittlung der Verfestigungsleistung $P_s$ die Nennleistung des Energiestrahls verwendet werden, wobei die Verfestigungsleistung berechnet wird, indem die von den Partikeln reflektierte Energiemenge als Verlustleistung berücksichtigt wird. Diese liegt beispielsweise bei Partikeln aus Stahl bei ca. 67 %.

Weiterhin kann bei der Berechnung der Verfestigungsleistung $P_s$ aus der Nennleistung des Energiestrahls berücksichtigt werden, dass zeitliche Abschaltintervalle des Energiestrahls eine Verringerung der Verfestigungsleistung im zeitlichen Mittel bewirken. Abschaltintervalle kommen beispielsweise bei pulverbettbasierten generativen Fertigungsverfahren dadurch zustande, dass zur Herstellung einer neuen Pulverschicht im Pulverbett die Bestrahlung desselben mit dem Energiestrahl unterbrochen wird. Die zeitlichen Abschaltintervalle können beispielsweise im Verhältnis zu den Bestrahlungszeiten auch zu einem prozentualen Abschlag bei der Berechnung der Verfestigungsleistung $P_s$ herangezogen werden.

Besonders vorteilhaft ist es, wenn die erste Lage des in Entstehung befindlichen Bauteils über die Bauplattform auf ein Temperaturniveau erwärmt wird, welches mindestens so hoch ist, wie eine berechnete oder durch Versuche ermittelte Erwärmung der obersten Schicht des ohne Verwendung der Heizeinrichtung fertiggestellten Bauteils (wie bereits erwähnt, ist diese Erwärmung der obersten Schicht außerhalb eines eventuellen Schmelzbades oder dessen Wärmeeinflusszone zu ermitteln). Wird über die Bauplattform dieses Temperaturniveau eingestellt, so kann durch Verringerung der Heizleistung auf 0 erreicht werden, dass am Ende das berechnete oder ermittelte Temperaturniveau im Bauteil erreicht wird und dieses auch während der Herstellung des Bauteils in den darunter liegenden Schichten bereits vorlag. Die Abkühlung des Bauteils erfolgt daher langsam, wodurch die Ausbildung von abkühlungsbedingten Spannungen in dem Bauteil vorteilhaft verringert werden kann.

Natürlich kann auch ein höheres Temperaturniveau als das ermittelte oder gemessene eingestellt werden, wobei auch in diesem Fall ein einheitliches Temperaturniveau der jeweils hergestellten Lage gewährleistet werden kann, indem die Heizleistung der Heizeinrichtung abgesenkt wird. Allerdings ist in diesem Fall auch bei Herstellung der obersten Lage des Bauteils noch eine Heizleistung der Heizeinrichtung erforderlich.

Alternativ zu einer Steuerung kann gemäß einer anderen Ausgestaltung der Erfindung auch vorgesehen werden, dass für das Absenken der Heizleistung eine Regelung verwendet wird, die als Regelgröße für ein Absenken der Heizleistung der Heizeinrichtung eine gemessene Oberflächentemperatur $T_i$ (die Ist-Temperatur) des in Herstellung befindlichen Werkstücks berücksichtigt, wobei die Messung außerhalb eines durch den Energiestrahl erzeugten Schmelzgrades oder während zeitlicher Abschaltintervalle des Energiestrahls durchgeführt wird. Bei sinternden generativen Fertigungsverfahren ist ein Schmelzbad nicht vorhanden, so dass die Messung immer durchgeführt werden kann. Bei einem Regelungsverfahren wird eine Korrektur der Heizleistung der Heizeinrichtung also über die tatsächlich in der in Herstellung befindlichen Lage oder gerade hergestellten Lage herrschende Temperatur ermittelt, wobei diese als Regelgröße Berücksichtigung findet. Die Führungsgröße wird durch die Referenztemperatur $T_R$ vorgegeben, wobei als Stellgröße die Heizleistung der Heizeinrichtung beeinflusst wird. Der so gebildete Regelkreis muss so ausgelegt werden, dass das dynamische Verhalten der Regelgröße (Regelschwingungen) innerhalb des definierten Toleranzbereichs für die Referenztemperatur $T_r$ liegt.

Gemäß einer vorteilhaften Ausgestaltung dieser Verfahrensalternative ist vorgesehen, dass die Oberflächentemperatur $T_i$ des in Herstellung befindlichen Werkstücks bestimmt wird, indem die von der Oberfläche des Werkstücks ausgehende Wärmestrahlung gemessen wird. Dies lässt sich vorteilhaft berührungslos durchführen. Für die Messung kann beispielsweise ein Pyrometer oder eine Wärmekamera eingesetzt werden. Die Messung kann an einzelnen Messpunkten erfolgen oder es wird die Gesamtfläche der in Entstehung befindlichen Lage verwendet. Wie bereits erwähnt, muss bei Vorliegen eines Schmelzbades in diesem Fall der Bereich des Schmelzbades und der Wärmeeinflusszone unberücksichtigt bleiben.

Gemäß einer besondere Ausgestaltung der Erfindung ist vorgesehen, dass bei dem Verfahren mit der bereits beschriebenen Steuerung zusätzlich eine Regelung verwendet wird, die als Regelgröße die gemessene Oberflächentemperatur $T_i$ des in Herstellung befindlichen Werkstücks berücksichtigt, wobei die Messung außerhalb eines durch den Energiestrahl erzeugten Schmelzbades oder während zeitlicher Abschaltintervalle des Energiestrahls durchgeführt wird und dass die durch die Steuerung vorgegebene Geschwindigkeit des Absenkens der Heizleistung korrigiert wird, wenn die gemessene Oberflächentemperatur $T_i$ nicht der Referenzstruktur $T_r$ entspricht. Die Regelung erfolgt nach den bereits angegebenen Kriterien. Die Korrektur der Geschwindigkeit des Absenkens der Heizleistung erfolgt erfindungsgemäß derart, dass die Geschwindigkeit erhöht wird, wenn $T_i$ zu hoch wird und verringert wird, wenn $T_i$ zu niedrig wird. Für die Geschwindigkeit liegt also das durch die Steuerung vorgegebene Modell zugrunde. Beispielsweise kann die Geschwindigkeit einer Absenkung der Heizleistung konstant gewählt sein. Es können aber auch kompliziertere Modelle zugrundeliegen, die die Bauteilgeometrie berücksichtigen. Weiterhin können bei der durch die Steuerung vorgegebenen Funktion des Absenkens der Heizleistung Erfahrungswerte herangezogen werden, die beispielsweise durch einen Probelauf der Herstellung des Bauteils erlangt wurden.

Unabhängig davon, welches Modell für die Steuerung zur Absenkung der Heizleistung herangezogen wird, kann die Entwicklung der tatsächlichen Oberflächentemperatur $T_i$ aufgrund von Abweichungen der Realität vom Modell vom gewünschten Wert abweichen. In diesem Fall ist durch den Regelkreis eine Korrektur der Führung der Heizleistung möglich, um zur Referenztemperatur $T_r$ zurückkehren zu können. Der Vorteil einer Kombination einer Steuerung mit einer Regelung liegt darin, dass eine Drift der tatsächlich gemessenen Oberflächentemperatur $T_i$ langsam erfolgt und eine Regelung mit geringem Aufwand als stabiler Regelkreis hergestellt werden kann, der sich robust gegenüber einer Veränderung verhält.

Gemäß einer vorteilhaften Ausgestaltung der kombinierten Variante kann vorgesehen werden, dass für ein Korrigieren der Geschwindigkeit des Absenkens der Heizleistung ein Korrekturintervall vorgegeben wird. Als Korrekturintervall ist ein Parameterfenster zu verstehen, welches eine Korrektur nur in einem bestimmten Ausmaß zulässt. Dieses Korrekturintervall kann beispielsweise im Bereich von +/- 20 % der aktuellen Heizleistung liegen. Alternativ kann ein Korrekturintervall auch mit einem absoluten Wert angegeben werden, um den die Heizleistung innerhalb eines bestimmten Zeitraums höchstens erhöht oder abgesenkt werden darf.

Weiterhin ist es vorteilhaft, wenn die Oberflächentemperatur $T_i$ des in Herstellung befindlichen Werkstücks bestimmt wird, indem die von der Oberfläche des Werkstücks ausgehende Wärmestrahlung gemessen wird. Hierbei können beispielsweise ein Pyrometer oder eine Wärmekamera zum Einsatz kommen, wie dies bereits ausführlich erläutert wurde.

Weiterhin wird die Aufgabe mit der eingangs angegebenen Anlage erfindungsgemäß dadurch gelöst, dass die Anlage eine Steuerungseinheit für die Heizeinrichtung aufweist, mit der das oben erläuterte Steuerungsverfahren durchführbar ist. Alternativ kann auch eine Regelungseinheit für die Heizeinrichtung vorgesehen werden, mit der das oben beschriebene Regelungsverfahren durchführbar ist. Eine weitere Alternative sieht vor, dass die Anlage eine Steuerungseinheit und eine Regelungseinheit für die Heizeinrichtung aufweist, mit der das oben erläuterte kombinierte Steuerungs- und Regelungsverfahren durchführbar ist. Die Anlage wird also erfindungsgemäß dazu genutzt, eines der oben beschriebenen Verfahren durchzuführen, wobei mit der Durchführung die bereits erläuterten Vorteile erreicht werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:

Figur 1     ein Ausführungsbeispiel der erfindungsgemäßen Anlage mit implementierter Regelung der Heizleistung schematisch im Schnitt, in der ein Ausführungsbeispiel des erfindungsgemäßen Verfahrens durchgeführt wird,

Figur 2     ein weiteres Ausführungsbeispiel der erfindungsgemäßen Anlage mit implementierter Steuerung im Schnitt, in der ein Ausführungsbeispiel des erfindungsgemäßen Verfahrens durchgeführt wird und

Figur 3     ein Blockschaltbild einer kombinierten Steuerung und Regelung für die Heizeinrichtung, wie diese in Anlagen gemäß Figur 1 oder 2 eingebaut werden kann.

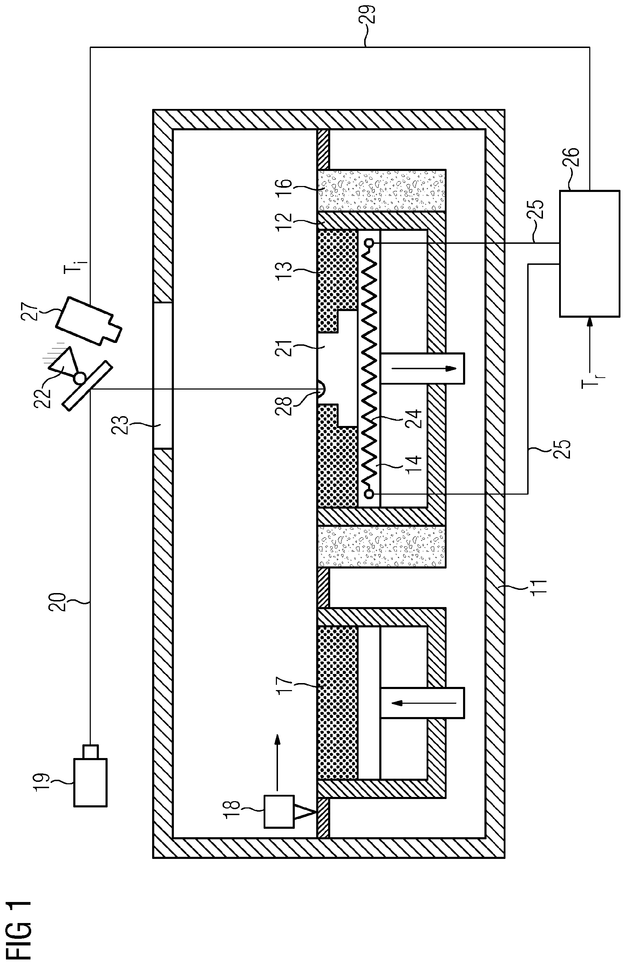

Eine Anlage gemäß Figur 1 weist eine Prozesskammer 11 auf, in der eine Vorrichtung 12 zur Aufnahme eines Pulverbetts 13 vorgesehen ist. Diese Vorrichtung enthält eine Bauplattform 14, die nach Art eines Kolbens in der Vorrichtung 12 lagenweise abgesenkt werden kann, um Platz für das Pulverbett 13 zu schaffen. Die Vorrichtung ist mit einer thermischen Isolierung 16 aus einem porösen Material, wie z. B. Keramik umgeben.

Zur Herstellung des Pulverbetts 13 ist ein Pulvervorrat 17 vorgesehen, über den mit Hilfe eines Abstreifers 18 Pulver auf die Oberfläche des Pulverbetts 13 transportiert werden kann. Ist eine neue Lage Pulver auf dem Pulverbett 15 erzeugt worden, wird diese mit Hilfe eines durch einen Laser 19 erzeugten Energiestrahls 20 lokal aufgeschmolzen, wodurch eine neue Lage eines in Entstehung befindlichen Bauteils 21 entsteht. Zu diesem Zweck wird der Energiestrahl 20 über eine Umlenkoptik 22 durch ein Fenster 23 in die Prozesskammer 11 eingekoppelt.

Zur Temperierung des in Entstehung befindlichen Bauteils 21 ist eine Heizeinrichtung 24 in Form einer elektrischen Widerstandsheizung in der Bauplattform 14 vorgesehen. Diese wird über Anschlussleitungen 25 mit elektrischer Energie versorgt, wobei die über die Anschlussleitungen 25 anliegende Heizleistung durch eine Regelungseinheit 26 bestimmt wird.

Als Führungsgröße wird an die Regelungseinheit 26 eine Solltemperatur $T_r$ übergeben, die als Referenzwert für diejenige Temperatur herangezogen wird, die an der Oberfläche des in Entstehung befindlichen Bauteils 21 herrschen soll. Die Einhaltung dieser Solltemperatur $T_r$ wird über einen Temperatursensor 27 in Form einer Wärmekamera oder eines Pyrometers überwacht. Die ermittelte Oberflächentemperatut (Ist-Temperatur) $T_i$ wird außerhalb eines Schmelzbades 28 gemessen, welches durch den Energiestrahl 20 in dem Pulverbett bzw. auf der Oberfläche des in Entstehung befindlichen Bauteils 21 erzeugt wird. Das Signal der gemessenen Temperatur $T_i$ wird über eine Signalleitung 29 an die Regelungseinheit 26 übergegeben und stellt damit die Regelgröße für den mittels der Regelungseinheit 26 realisierten Regelkreis dar. Als Störgröße ist vorrangig die Heizleistung zu verstehen, die durch den Energiestrahl 20 in das Bauteil 21 eingebracht wird. Abhängig von der zusätzlichen Erwärmung durch den Energiestrahl 20 wird die Heizleistung durch die Regelungseinheit 26 zurückgenommen, wobei die Heizleistung in dem Regelkreis die Stellgröße darstellt.

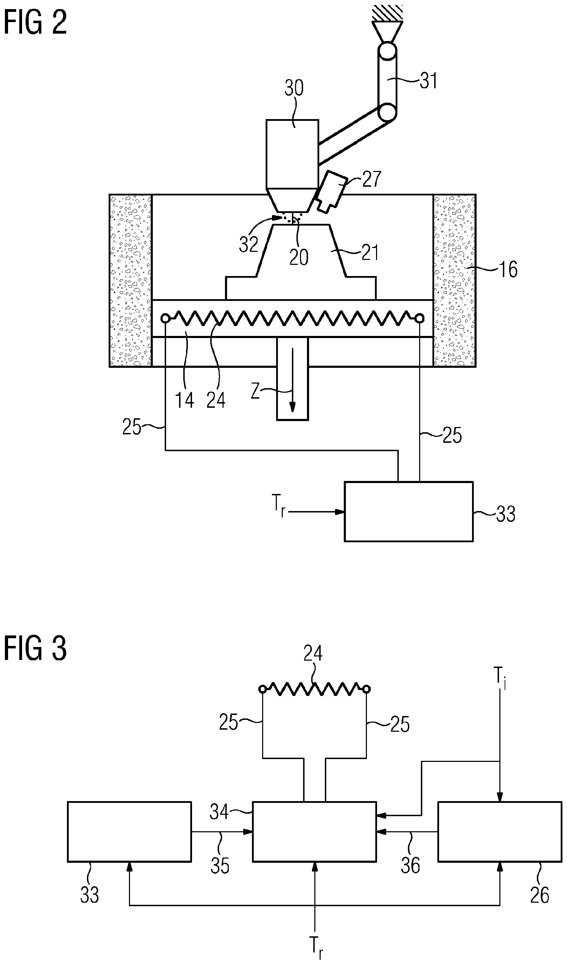

Die Anlage gemäß Figur 1 kann zum Laserschmelzen oder Lasersintern eingesetzt werden. Anstelle eines Lasers 19 könnte auch eine Einrichtung zur Erzeugung eines Elektronenstrahls Verwendung finden, wobei die Anlage in diesem Falle für ein Elektrodenstrahlschmelzen ausgelegt würde (nicht dargestellt). Die Anlage gemäß Figur 2 ist dagegen für ein Laserauftragsschweißen geeignet. Zu diesem Zweck ist ein Applikationskopf 30 vorgesehen, der mittels eines Schwenkarms 31 oberhalb der Bauplattform 14 in Position gebracht werden kann. Auf diese Weise entsteht auf der Bauplattform 14 lagenweise das Bauteil 21, wobei in dem Applikationskopf 30 einerseits ein nicht näher dargestellter Laser zur Erzeugung des Energiestrahls 20 und ein Pulverförderer untergebracht sind. Mittels des Pulverförderers wird Pulver 32 direkt in die Auftreffstelle des Energiestrahls 20 transportiert und an der Oberfläche des in Entstehung befindlichen Bauteils 21 angeschmolzen.

Zur Anpassung der Temperatur auf der Oberfläche des in Entstehung befindlichen Bauteils 21 ist eine Steuerungseinheit 33 vorgesehen. Mittels dieser werden die Anschlussleitungen 25 der Heizeinrichtung 24 angesteuert, so dass die Heizleistung für die Heizeinrichtung 24 verstellt werden kann. Als Eingangsgröße wird die Referenztemperatur (Solltemperatur) $T_r$ in die Steuerungseinheit übergeben. In dieser ist ein mathematisches Modell abgelegt, mit dessen Hilfe die Temperaturentwicklung an der jeweils aktuellen Oberfläche des in Herstellung befindlichen Bauteils (gemeint ist die Oberfläche, an der mittels des Energiestrahls 20 das Pulver 32 angeschmolzen wird) bestimmt werden kann. Dies geschieht in Abhängigkeit eines Absenkungswegs z der Bauplattform 14. Beispielsweise kann für eine angenommenen Fall eines Nichteingreifens der Steuerung eine lineare Temperaturzunahme an der Oberfläche des Bauteils 20 angenommen werden, wobei bei der Herstellung der ersten Lage eine Anfangstemperatur $T_0$ herrscht und bei der Herstellung der letzten Lage eine Temperatur $T_1$, die mittels der oben angegebenen Berechnungsformel ermittelt wird. Um die Oberfläche des in Entstehung befindlichen Bauteils 21 konstant zu halten, wird die Heizleistung an der Heizeinrichtung 24 während der Herstellung des Bauteils jedoch linear zurückgefahren.

An dem Applikationskopf 30 ist außerdem ein Temperatursensor 27 vorgesehen, der durch die Steuerungseinheit 33 nicht verwendet wird. Mit Hilfe des Temperatursensors 27 könnte aber eine Regelung gemäß Figur 1 realisiert werden. Genauso ist es auch möglich, bei der Anlage gemäß Figur 1 eine Steuerungseinheit gemäß Figur 2 vorzusehen. Zuletzt ist es auch möglich, bei beiden Anlagen gemäß Figur 1 und Figur 2 eine kombinierte Steuerung und Regelung gemäß Figur 3 zu implementieren.

Gemäß Figur 3 ist ein Blockschaltbild für eine kombinierte Steuerung und Regelung dargestellt. Daher kommen sowohl eine Steuerungseinheit 33 wie auch eine Regelungseinheit 26 zum Einsatz. Sowohl die Steuerungseinheit 33 als auch die Regelungseinheit 26 nutzen als Eingangssignal die Referenztemperatur $T_r$, die an der gerade in Herstellung befindlichen Oberfläche des Bauteils herrschen soll. Die Regelungseinheit 26 empfängt außerdem ein Signal für die tatsächlich an der Oberfläche herrschende Oberflächentemperatur (Ist-Temperatur) $T_i$, die mit einem nicht dargestellten Temperatursensor ermittelt wird. Sowohl die Steuerungseinheit 33 als auch die Regelungseinheit 26 erzeugen als Ausgangssignal einen Wert für die Heizleistung, mit welcher die Heizeinrichtung 24 betrieben werden soll. Diese werden an ein Steuermodul 34 als Eingangsgrößen weitergegeben, wobei das Steuermodul 34 die Anschlussleitungen 25 mit der erforderlichen Heizleistung versorgt.

In dem Steuermodul 34 werden somit ein Steuersignal 35 der Steuerung und ein Stellsignal 36 der Regelung verarbeitet und hieraus die erforderliche Heizleistung berechnet. Solange die tatsächliche Temperatur $T_i$ der geforderten Temperatur $T_r$ entspricht, wird ausschließlich das Steuersignal 35 berücksichtigt. Sobald $T_r$ und $T_i$ auseinanderfallen, wird aufgrund des Stellsignals 36 eine Korrektur der Heizleistung berechnet, mit der die Heizeinrichtung 24 in der Folge betrieben wird. Zu diesem Zweck werden die Signale $T_r$ und $T_i$ auch von dem Steuermodul 34 verarbeitet.

Bei der Darstellung gemäß Figur 3 sind die Funktionen der Steuerung, der Regelung und der Versorgung der Heizeinrichtung 24 mit einer Heizleistung auf die Steuerungseinheit 33, die Regelungseinheit 25 und das Steuermodul 34 aufgeteilt. Dies dient vorrangig der Übersichtlichkeit und der Erläuterung der Funktionalitäten. In der Realität können diese Blöcke selbstverständlich auch in einer Funktionseinheit zusammengefasst sein. Hierbei kann es sich beispielsweise um einen Rechner handeln, der alle Funktionalitäten gewährleistet und hierbei die genannten Eingangsgrößen und Ausgangsgrößen berücksichtigt.

## Patentansprüche

1. Verfahren zum generativen Herstellen eines Bauteils (21) auf einer Bauplattform (14)

   • bei dem Partikel eines Baumaterials Lage für Lage erst auf die Bauplattform (14) und dann auf das in Entstehung befindliche Bauteil (21) aufgebracht und durch einen Energiestrahl (20) verfestigt werden,
   • wobei die Bauplattform mit einer Heizeinrichtung (24) ausgestattet ist und das in Entstehung befindliche Bauteil (21) über die Bauplattform (14) erwärmt wird,

   **dadurch gekennzeichnet,**
   **dass** die erste Lage des in Entstehung befindlichen Bauteils (21) über die Bauplattform (14) auf ein Temperaturniveau erwärmt wird, welches mindestens so hoch ist wie eine berechnete oder durch Versuche ermittelte Erwärmung der obersten Schicht des ohne Verwendung der Heizeinrichtung (24) fertiggestellten Bauteils und
   **dass** eine Referenztemperatur $T_r$ für die jeweils hergestellte Lage und ein Toleranzbereich für die Referenztemperatur $T_r$ definiert wird und die Heizleistung der Heizeinrichtung (24) im fortlaufenden Verfahren in dem Maße abgesenkt wird, dass der Toleranzbereich für eine Referenztemperatur $T_r$ in der jeweils letzten hergestellten Lage eingehalten wird.

**2.** Verfahren nach Anspruch 1,
**dadurch gekennzeichnet,**
**dass** für das Absenken der Heizleistung eine Steuerung verwendet wird, die als Eingangsgrößen für ein Absenken der Heizleistung der Heizeinrichtung (24) eine Verfestigungsleistung $P_s$ des Energiestrahls (20) und Wärmeleiteigenschaften des Bauteils (21) berücksichtigt.

**3.** Verfahren nach Anspruch 2,
**dadurch gekennzeichnet,**
**dass** die Verfestigungsleistung $P_s$ aus der Nennleistung des Energiestrahls (20) berechnet wird, wobei die von den Partikeln reflektierte Energiemenge als Verlustleistung berücksichtigt wird.

**4.** Verfahren nach einem der Ansprüche 2 oder 3,
**dadurch gekennzeichnet,**
**dass** die Verfestigungsleistung $P_s$ aus der Nennleistung des Energiestrahls (20) berechnet wird, wobei zeitliche Abschaltintervalle des Energiestrahls als Verringerung der Verfestigungsleistung in Bezug auf die Nennleistung berücksichtigt werden.

**5.** Verfahren nach einem der Ansprüche 2 bis 4,
**dadurch gekennzeichnet,**
**dass** die Wärmeleiteigenschaften in Form eines Wärmewiderstands $R_{th}$ oder eines Wärmeleitwerts des Bauteils berücksichtigt werden.

**6.** Verfahren nach einem der voranstehenden Ansprüche,
**dadurch gekennzeichnet,**
**dass** die Erwärmung der obersten Schicht des fertiggestellten Bauteils nach folgendem Modell berechnet wird:

$$T_1 = T_0 + R_{th} \cdot P_s$$

wobei $T_1$ die Temperatur des fertiggestellten Bauteils, $T_0$ die Ausgangstemperatur der Bauplatte ohne eine Beheizung, $R_{th}$ der thermische Widerstand im fertiggestellten Bauteil und $P_s$ die Verfestigungsleistung des Energiestrahls ist.

**7.** Verfahren nach Anspruch 1
**dadurch gekennzeichnet,**
**dass** für das Absenken der Heizleistung eine Regelung verwendet wird, die als Regelgröße für ein Absenken der Heizleistung der Heizeinrichtung (24) eine gemessene Oberflächentemperatur $T_i$ des in Herstellung befindlichen Werkstücks berücksichtigt, wobei die Messung

• außerhalb eines durch den Energiestrahl erzeugten Schmelzbades (28) oder
• während zeitlicher Abschaltintervalle des Energiestrahls (20) durchgeführt wird.

**8.** Verfahren nach Anspruch 7,
**dadurch gekennzeichnet,**
**dass** die Oberflächentemperatur $T_i$ des in Herstellung befindlichen Werkstückes bestimmt wird, indem die von der Oberfläche des Werkstückes ausgehende Wärmestrahlung gemessen wird.

**9.** Verfahren nach einem der Ansprüche 2 bis 6,
**dadurch gekennzeichnet,**
**dass** zusätzlich eine Regelung verwendet wird, die als Regelgröße eine gemessene Oberflächentemperatur $T_i$ des in Herstellung befindlichen Werkstücks berücksichtigt, wobei die Messung

• außerhalb eines durch den Energiestrahl erzeugten Schmelzbades (28) oder
• während zeitlicher Abschaltintervalle des Energiestrahls (20) durchgeführt wird,

und **dass** das die Geschwindigkeit des Absenkens der Heizleistung durch die Steuerung korrigiert wird, wenn die gemessene Oberflächentemperatur $T_i$ nicht der Referenztemperatur $T_r$ entspricht.

**10.** Verfahren nach Anspruch 9
**dadurch gekennzeichnet,**
**dass** für ein Korrigieren der Geschwindigkeit des Absenkens der Heizleistung ein Korrekturintervall, insbesondere ein Korrekturintervall von +/- 20 % vorgegeben wird.

**11.** Verfahren nach Anspruch 9 oder 10,
**dadurch gekennzeichnet,**
**dass** die Oberflächentemperatur $T_i$ des in Herstellung befindlichen Werkstücks bestimmt wird, indem die von der Oberfläche des Werkstücks ausgehende Wärmestrahlung gemessen wird.

**12.** Anlage zum lagenweisen generativen Herstellen eines Bauteils (21) mit einer Bauplattform (14) für das herzustellende Bauteil (21), wobei die Bauplattform (14) mit einer Heizeinrichtung (24) ausgestattet ist,
**dadurch gekennzeichnet,**
**dass** die Anlage eine Steuerungseinheit (33) für die Heizeinrichtung (24) aufweist, die so angepasst ist, dass sie das Verfahren nach einem der Ansprüche 2 bis 6 ausführt oder eine Regelungseinheit (26) für die Heizeinrichtung (24) aufweist, die so angepasst ist, dass sie das Verfahren nach einem der Ansprüche 7 oder 8 2- ausführt .

**13.** Anlage zum lagenweisen generativen Herstellen eines Bauteils (21) mit einer Bauplattform (14) für das herzustellende Bauteil (21), wobei die Bauplattform mit einer Heizeinrichtung (24) ausgestattet ist,
**dadurch gekennzeichnet,**
**dass** die Anlage eine Steuerungseinheit (33) und eine Regelungseinheit (26) für die Heizeinrichtung (24) aufweist, die so angepasst ist, dass sie das Verfahren nach einem der Ansprüche 9 bis 11 ausführt.

**Claims**

**1.** Method for the generative manufacturing of a component (21) on a building platform (14)

- in which particles of a building material are first applied layer by layer to the building platform (14) and then to the component (21) under construction and are fused by an energy beam (20),
- the building platform being equipped with a heating device (24) and the component (21) under construction being heated by means of the building platform (14),

**characterized**
**in that** the first layer of the component (21) under construction is heated by means of the building platform (14) to a temperature level that is at least as high as a calculated or experimentally determined heating of the uppermost layer of the component completed without using the heating device (24) and
**in that** a reference temperature $T_r$ for the layer produced in each case and a tolerance range for the reference temperature $T_r$ are defined and the heating power of the heating device (24) is lowered as the method progresses to the extent that the tolerance range for a reference temperature $T_r$ is maintained in the layer that is last produced in each case.

**2.** Method according to Claim 1,
**characterized**
**in that** an open-loop control, which makes allowance for a fusing power $P_s$ of the energy beam (20) and the heat conducting properties of the component (21) as input variables for lowering of the heating power of the heating device (24), is used for the lowering of the heating power.

**3.** Method according to Claim 2,
**characterized**
**in that** the fusing power $P_s$ is calculated from the nominal power of the energy beam (20), allowance being made for the amount of energy that is reflected by the particles as a power loss.

**4.** Method according to either of Claims 2 or 3,
**characterized**
**in that** the fusing power $P_s$ is calculated from the nominal power of the energy beam (20), allowance being made for switching-off time intervals of the energy beam as a reduction of the fusing power with respect to the nominal power.

**5.** Method according to one of Claims 2 to 4,
**characterized**
**in that** allowance is made for the heat conducting properties in the form of a thermal resistance $R_{th}$ or a coefficient of thermal conductivity of the component.

**6.** Method according to one of the preceding claims,
**characterized**
**in that** the heating of the uppermost layer of the completed component is calculated in accordance with the following model:

$$T_1 = T_0 + R_{th} \cdot P_s$$

where $T_1$ is the temperature of the completed component, $T_0$ is the starting temperature of the building platform without heating, $R_{th}$ is the thermal resistance of the completed component and $P_s$ is the fusing power of the energy beam.

**7.** Method according to Claim 1,
**characterized in that** a closed-loop control, which makes allowance for a measured surface temperature $T_i$ of the workpiece being manufactured as a controlled variable for lowering of the heating power of the heating device (24), is used for the lowering of the heating power, the measurement

- being carried out outside a melt bath (28) produced by the energy beam or
- during switching-off time intervals of the energy beam (20) .

**8.** Method according to Claim 7,
**characterized**
**in that** the surface temperature $T_i$ of the workpiece being manufactured is determined by measuring the thermal radiation emanating from the surface of the workpiece.

**9.** Method according to one of Claims 2 to 6,
**characterized**
**in that** a closed-loop control, which makes allowance for a measured surface temperature $T_i$ of the workpiece being manufactured as a controlled variable, is additionally used, the measurement

- being carried out outside a melt bath (28) produced by the energy beam or
- during switching-off time intervals of the energy beam (20) ,

and **in that** the rate of lowering the heating power prescribed by the open-loop control is corrected if the measured surface temperature $T_i$ does not correspond to the reference temperature $T_r$.

**10.** Method according to Claim 9,
**characterized**
**in that** a correction interval, in particular a correction interval of +/- 20%, is prescribed for correcting the rate of lowering the heating power.

**11.** Method according to Claim 9 or 10,
**characterized**
**in that** the surface temperature $T_i$ of the workpiece being manufactured is determined by measuring the thermal radiation emanating from the surface of the workpiece.

**12.** Apparatus for the layer-by-layer generative manufacturing of a component (21) with a building platform (14) for the component (21) to be manufactured, the building platform (14) being equipped with a heating device (24),
**characterized**
**in that** the apparatus has an open-loop control unit (33) for the heating device (24) which is adapted such that it carries out the method according to one of Claims 2 to 6 or a closed-loop control unit (26) for the heating device (24) which is adapted such that it carries out the method according to either of Claims 7 and 8.

13. Apparatus for the layer-by-layer generative manufacturing of a component (21) with a building platform (14) for the component (21) to be manufactured, the building platform being equipped with a heating device (24),
**characterized**
**in that** the apparatus has an open-loop control unit (33) and a closed-loop control unit (26) for the heating device (24) which is adapted such that it carries out the method according to one of Claims 9 to 11.


**Revendications**

1. Procédé de fabrication générative d'une pièce (21) sur une plateforme (14) de construction

   • dans lequel on dépose des particules d'un matériau de construction couche par couche d'abord sur la plateforme (14) de construction et ensuite sur la pièce (21) se trouvant en création, et on les consolide par un faisceau (20) d'énergie,
   • dans lequel la plateforme de construction est équipée d'un dispositif (24) de chauffage et on chauffe, par la plateforme (14) de construction, la pièce (21) se trouvant en création,

   **caractérisé en ce que**
   on porte la première couche de la pièce (21) se trouvant en création par l'intermédiaire de la plateforme (14) à un niveau de température, qui est au moins aussi haut qu'un réchauffement, calculé ou déterminé par des essais, de la couche la plus haute de la pièce finie sans utilisation du dispositif (24) de chauffage, et
   **en ce que** l'on définit une température $T_r$ de référence de la couche fabriquée respectivement et une plage de tolérance de la température $T_r$ de référence et on abaisse la puissance de chauffage du dispositif (24) de chauffage dans le procédé en cours, dans la mesure ou la plage de tolérance d'une température $T_r$ de référence de la couche, fabriquée respectivement en dernier, est respectée.

2. Procédé suivant la revendication 1,
   **caractérisé en ce que**
   l'on utilise pour l'abaissement de la puissance de chauffage une commande, qui prend en compte, comme grandeurs d'entrée pour un abaissement de la puissance de chauffage du dispositif (24) de chauffage, une puissance $P_s$ de consolidation du faisceau (20) d'énergie et des propriétés de conduction de la chaleur de la pièce (21).

3. Procédé suivant la revendication 2,
   **caractérisé en ce que**
   l'on calcule la puissance $P_s$ de consolidation à partir de la puissance nominale du faisceau (20) d'énergie, la quantité d'énergie réfléchie par les particules étant prise en compte comme puissance perdue.

4. Procédé suivant l'une des revendications 2 ou 3,
   **caractérisé en ce que**
   l'on calcule la puissance $P_s$ de consolidation à partir de la puissance nominale du faisceau (20) d'énergie, des intervalles d'interruption dans le temps du faisceau d'énergie étant pris en compte comme diminution de la puissance de consolidation par rapport à la puissance nominale.

5. Procédé suivant l'une des revendications 2 à 4,
   **caractérisé en ce que**
   l'on prend en compte les propriétés de conduction de la chaleur sous la forme d'une résistance $R_{th}$ à la chaleur ou d'un coefficient de conduction de la chaleur de la pièce.

6. Procédé suivant l'une des revendications précédentes,
   **caractérisé en ce que**
   l'on calcule le chauffage de la couche la plus haute de la pièce finie par le modèle suivant :

$$T_1 = T_o + R_{th} \cdot P_s$$

   dans laquelle $T_1$ est la température de la pièce finie, $T_0$ est la température initiale de la plaque de construction sans un chauffage, $R_{th}$ est la résistance thermique de la pièce finie et $P_s$ est la puissance de consolidation du faisceau d'énergie.

**7.** Procédé suivant la revendication 1,
**caractérisé en ce que**,
pour l'abaissement de la puissance de chauffage, on utilise une régulation, qui prend en compte, comme grandeur de régulation pour un abaissement de la puissance de chauffage du dispositif (24) de chauffage, une température $T_i$ de surface mesurée de la pièce se trouvant en fabrication, dans lequel on effectue la mesure,

- à l'extérieur d'un bain (28) en fusion produit par le faisceau d'énergie ou
- pendant des intervalles d'interruption dans le temps du faisceau (20) d'énergie.

**8.** Procédé suivant la revendication 7,
**caractérisé en ce que**
l'on détermine la température $T_i$ de surface de la pièce se trouvant en fabrication, en mesurant le rayonnement calorifique sortant de la surface de la pièce.

**9.** Procédé suivant l'une des revendications 2 à 6,
**caractérisé en ce que**
l'on utilise en outre une régulation, qui prend compte, comme grandeur de régulation, une température $T_i$ de surface mesurée de la pièce se trouvant en fabrication, la mesure étant effectuée

- à l'extérieur d'un bain (28) en fusion produit par le faisceau d'énergie ou
- pendant des intervalles d'interruption dans le temps du faisceau (20) d'énergie,

et **en ce que** l'on corrige, par la commande, la vitesse de l'abaissement de la puissance de chauffage, si la température $T_i$ de surface mesurée ne correspond pas à la température $T_r$ de référence.

**10.** Procédé suivant la revendication 9,
**caractérisé en ce que**,
pour une correction de la vitesse de l'abaissement de la puissance de chauffage, on prescrit un intervalle de correction, notamment un intervalle de correction de +/- 20%.

**11.** Procédé suivant la revendication 9 ou 11,
**caractérisé en ce que**
l'on détermine la température $T_i$ de surface de la pièce se trouvant en fabrication, en mesurant le rayonnement calorifique sortant de la surface de la pièce.

**12.** Installation de fabrication générative couche par couche d'une pièce (21), comprenant une plateforme de construction pour la pièce (21) à fabriquer, la plateforme (14) de construction étant équipée d'un dispositif (24) de chauffage,
**caractérisée en ce que**
l'installation a une unité (33) de commande du dispositif (24) de chauffage, qui est adaptée de manière à effectuer le procédé suivant l'une des revendications 2 à 6, ou une unité (26) de régulation du dispositif (24) de chauffage, qui est adaptée de manière à effectuer le procédé suivant l'une des revendications 7 ou 8.

**13.** Installation de fabrication générative couche par couche d'une pièce (21), comprenant une plateforme de construction de la pièce (21) à fabriquer, la plateforme de construction étant équipée d'un dispositif (24) de chauffage,
**caractérisée en ce que**
l'installation a une unité (33) de commande et une unité (26) de régulation du dispositif (24) de chauffage, qui est adaptée de manière à effectuer le procédé suivant l'une des revendications 9 à 11.

FIG 1

EP 3 383 568 B1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1355760 B1
- DE 102009051479 A1
- DE 102012206122 A1
- US 2005173380 A1